# EUROPÄISCHE PATENTSCHRIFT

(11) **EP 0 653 025 B1**
(45) Veröffentlichungstag und Bekanntmachung des Hinweises auf die Patenterteilung: **28.05.1997**
(21) Anmeldenummer: 93915965.3
(22) Anmeldetag: 27.07.1993
(51) Int. Cl.: F16B 19/00, B23K 9/20

(54) **SCHWEISSBOLZEN, SCHWEISSGERÄT ZUM ANSCHWEISSEN EINES BEFESTIGUNGSELEMENTES UND VERFAHREN ZUR BEFESTIGUNG EINES MONTAGETEILS AUF EIN ANSCHWEISSBARES BEFESTIGUNGSELEMENT**
WELDING STUD, WELDING DEVICE FOR WELDING A SECURING COMPONENT AND METHOD OF SECURING AN ASSEMBLY COMPONENT TO A WELDABLE SECURING COMPONENT
GOUJON A SOUDER, DISPOSITIF DE SOUDAGE POUR SOUDER UN ELEMENT DE FIXATION ET PROCEDE DE FIXER UNE PIECE DE MONTAGE SUR UN ELEMENT DE FIXATION

(30) Priorität: 30.07.1992 DE 4225199; 30.07.1992 DE 4225215; 30.07.1992 DE 4225216; 05.01.1993 DE 4300120; 05.01.1993 DE 4300121
(43) Veröffentlichungstag der Anmeldung: 17.05.1995
(60) Teilanmeldung: 96117052.9
(73) Patentinhaber: SPLITFAST TECHNOLOGIES LIMITED, Dublin 2 (IE)
(72) Erfinder: BARANDUN, Heinz, Peter, CH-8044 Zürich (CH)
(74) Vertreter: AMMANN INGENIEURS-CONSEILS EN PROPRIETE INTELLECTUELLE SA BERNE
(86) Internationale Anmeldenummer: EP9301922
(87) Internationale Veröffentlichungsnummer: WO9403735

(56) Entgegenhaltungen:
- EP-A- 0 550 977
- CA-A- 887 911
- DE-A- 1 565 557
- DE-A- 2 504 365
- DE-A- 3 218 886
- DE-B- 2 227 384
- DE-C- 832 086
- DE-U- 7 925 469
- GB-A- 1 275 799
- US-A- 2 400 142
- US-A- 3 996 446

## Beschreibung

Die Erfindung betrifft nach Anspruch 1 einen Schweissbolzen, nach Anspruch 14 ein Schweissgerät zum Anschweissen länglicher Befestigungselemente und nach Anspruch 17 ein Verfahren zur Befestigung eines Montageteils auf ein Befestigungselement.

Schweissbolzen sind bekannt, wie sie häufig im Automobilbau verwendet werden, um beispielsweise Karosserieteile oder elektrische Leitungen oder dergleichen zu befestigen. Allen diesen vorbekannten Schweissbolzen ist gemeinsam, dass sie als massive Bolzen gefertigt sind, die in der Regel einen Flansch aufweisen, an dem sie auf dem Karosserieblech aufgeschweisst werden, beispielsweise gemäss DE-A-32 18 886 oder DE-U-79 25 469. Ein solcher massiver Bolzen bedingt an einem Bolzen-Schweissgerät eine flexible Spannzange. Aus den Zeichnungen der Offenlegungsschrift geht hervor, dass die Halterung mit der Spannzange des Bolzen-Schweissgerätes, bedingt durch die starre Ausführung des Bolzens und insbesondere auch durch den Flansch mit breiterem Durchmesser, aufwendige mechanische Teile aufweisen muss, die selbst bei hohen Taktfrequenzen zuverlässig arbeiten müssen.

Ausserdem ergeben sich aus der Ausgestaltung der vorbekannten Schweissbolzen Probleme bezüglich der gleichmässigen Schweissgüte der Verbindung zwischen dem Blechteil und dem Bolzen, wodurch spezielle Massnahmen für die Ausgestaltung der Schweissflächen des Bolzens notwendig sind. Dies trifft auch für die Befestigungselemente gemäss DE-B-2 227 384 zu, wonach entweder Schraubbolzen oder Schraubenmuttern als Befestigungselemente angeschweisst werden. Diese beiden gezeigten Befestigungselemente stellen besonders hohe Anforderungen an die Spannzange des Schweissgerätes, die speziell dafür ausgestaltet werden muss.

Ausserdem ist bei Ermüdung der Spannzange der elektrische Kontakt zum Bolzen nicht mehr gewährleistet, was zu Schmorstellen führt und die Zuverlässigkeit, die besonders bei Montagebändern unerlässlich ist, herabsetzt.

Schliesslich erfordern massive, angeschweisste Befestigungselemente relativ aufwendige Montageteile mit beschränkter Festigkeit ihrer Verbindung mit dem Befestigungselement.

Ein Befestigungselement ist aus der DE-C-832 086 bekannt, das als Spannhülse ausgebildet ist. Obwohl eine solche Spannhülse an sich anschweissbar wäre, da sie aus Metall besteht, ist in der genannten Patentschrift kein Hinweis darauf zu finden, und im Gegenteil dazu die Erfindung darauf gerichtet, die Enden der Hülse abzurunden. Daher ist diese Spannhülse für eine dauerhafte Befestigung ungeeignet und weist auch keine Rückhalteteile für die Befestigung von Montageteilen auf.

Des weiteren sind aus der CA-A-887,911, bzw. GB-A-1,275,799 Befestigungselemente bekannt, wobei eine geschlitzte Hülse mittels eines unter Federdruck stehenden Bolzen im Innern seines Mittelteils erfasst, an ein Bauteil gedrückt und angeschweisst wird, woraufhin die Seitenteile umgebogen werden. Ein solches Verfahren eignet sich nicht für eine rationelle und vor allem sichere Produktion, wie sie beim Automobilbau gefordert wird.

Das gleiche wie oben gilt auch für das topfartige Element gemäss US-A-3,996,446, das zwar federnd ausgebildet ist, aber zuerst in die einzig mögliche richtige Lage gebracht werden muss, um beim Anschweissen im Innern erfasst und angedrückt zu werden.

Es ist von diesem bekannten Stand der Technik ausgehend eine Aufgabe der vorliegenden Erfindung, einen Schweissbolzen anzugeben, der einerseits sein sicheres Anschweissen an Unterlagen mit einem grösseren Dickenbereich gewährleistet und bereits in seiner einfachsten Ausführungsform die Möglichkeit bietet, verschiedenartige Montageteile leicht daran zu befestigen, und andererseits den Halteteil des Schweissgerätes sowie seine Zuführung wesentlich vereinfacht und einen optimalen Stromfluss zwischen dem Halter und dem Befestigungselement beim Schweissvorgang gewährleistet. Ein solcher Schweissbolzen ist in Patentanspruch 1 definiert.

Ferner weisen die vorbekannten Schweissbolzen oder Befestigungselemente eine bestimmte Schweissfläche auf, die lagerichtig im Schweissgerät angeordnet sein muss. Dies kompliziert die Zuführung, indem diese Elemente vorsortiert in das Schweissgerät eingeführt werden müssen.

Bei bevorzugten Ausführungsformen des erfindungsgemässen Schweissbolzens muss dieser einerseits nicht lagerichtig vorsortiert werden, um in den starren Halter eingeführt zu werden, und andererseits ist die Federung, bzw. Anpresskraft durch die Ausgestaltung des Längsschlitzes an den stromführenden Halter derart hoch, dass ein optimaler Uebergang des Stromflusses vom Halter auf das Befestigungselement immer gewährleistet ist.

Während in einer Ausführungsform die konischen Trichter der beiden Stirnseiten des Schweissbolzens gewindeförmig ausgebildet sind, kann der Schweissbolzen auch mit einem Aussengewinde oder mit Rückhaltekrallen versehen sein. Allen Schweissbolzen gemeinsam ist jedoch, dass sie federnd ausgebildet sind, um eine für die Befestigungstechnik notwendige Flexibilität und einen guten Stromübergang zu gewährleisten.

Wie eingangs erwähnt, werden vorbekannte Bolzen beispielsweise mit einem Schweissgerät gemäss DE-A-32 18 886 oder DE-U-79 25 469 angeschweisst. Bei derartigen Schweissgeräten mit bekannten Bolzenhaltern mit einer Spannzange, die aus Stahl oder Berylliumkupfer gefertigt ist, unterliegt bei der geforderten Flexibilität die Spannzange einem grossen Verschleiss, besonders dann, wenn die Kontakt- und Spannflächen der Spannzange an spitzen Gewindezonen der Bolzen anliegen.

Beim Bolzenschweissen nach dem Hubzündungsprinzip werden über die kleinen Kontaktstellen 3 - 5000 A übertragen, was bei Nachlassen der Spannkraft der Spannzange des Halters zu Schmorstellen führt. Dies setzt die Zuverlässigkeit, die besonders bei Montagebändern unerlässlich ist, herab.

Aus der EP-A-406 459 ist ausserdem eine Bolzenschweisspistole bekannt, die Bolzenhalterrohre mit unterschiedlichen Durchmessern benötigt sowie Kunststoffscheibeneinsätze, wobei die Halterrohre einem relativ starken Verschleiss unterworfen sind.

Schliesslich bedingt die Ausgestaltung der vorbekannten Schweissbolzen mit einer bestimmten Schweissfläche eine Einrichtung zum gerichteten Zuführen der Schweissbolzen.

Es ist davon ausgehend eine weitere Aufgabe der vorliegenden Erfindung ein Schweissgerät anzugeben, dessen Zuführung und Halteteil für längliche Befestigungselemente wesentlich vereinfacht werden kann und einen optimalen Stromfluss zwischen dem Halteteil und dem Befestigungselement beim Schweissvorgang gewährleistet. Ein Schweissgerät, dass diese Aufgabe löst, ist in den Patentansprüchen 14-16 beschrieben.

Das beanspruchte Schweissgerät zeichnet sich dadurch aus, dass sein Halter anstatt einer flexiblen Spannzange ein starres Rohr aufweist, in dem das als flexible Hülse ausgebildete Befestigungselement geführt und grossflächig umfasst ist. Dadurch entfällt ein Grossteil der störungsanfälligen beweglichen Teile des Schweissgerätes.

Bei vorbekannten Anordnungen von Montageteilen auf starre Befestigungselemente weist die Innenwand der Befestigungsbohrung des zu montierenden Montageteils, meist aus Kunststoff, in der Regel Stege auf, die gleichmässig als steife Rippen verteilt sind. Das Aufsetzen eines solchen Teiles auf den massiven Schweissbolzen, der profiliert sein kann, erfordert hohe Aufdrückkräfte, die einen hohen Energieaufwand und eine steife Konstruktion bedingen, insbesondere bei halb- oder vollautomatischen Montagewerkzeugen.

Es sind auch Montageteile mit flexiblen Sperrzungen bekannt, die in eine Profilierung des Schweissbolzens eingreifen, doch lassen sich dort nur geringe Zug- und Scherkräfte vom Montageteil auf den Bolzen übertragen.

Auch bei einer zylindrischen Bohrung des Montageteils sind die Montagekräfte noch um ein Vielfaches höher als beim Montageteil mit Stegen, doch ergeben sich auch hier nur punktförmige Kontaktstellen zwischen dem Bolzen und der Innenwandung der Bohrung des Montageteils.

Es ist davon ausgehend eine weitere Aufgabe der Erfindung, ein Verfahren zur Befestigung eines Montageteils auf ein angeschweisstes Befestigungselement anzugeben, das eine wesentliche Vereinfachung der Ausgestaltung der Montageteile und ihr Aufsetzen ergibt und eine grössere Sicherheit und Zuverlässigkeit der Verbindung bringt sowie eine grössere Vielfalt der Montageteile ermöglicht. Ein Verfahren, das diese Aufgabe löst, ist in den Patentansprüchen 17-29 beschrieben.

Die Erfindung wird im folgenden anhand einer Zeichnung von Ausführungsbeispielen näher erläutert werden.
Fig. 1 zeigt in perspektivischer Sicht ein erstes Ausführungsbeispiel eines erfindungsgemässen, als Befestigungselement dienenden Schweissbolzens,
Fig. 2 zeigt das Befestigungselement von Fig. 1 im Schnitt,
Fig. 3 zeigt ein Befestigungselement gemäss Fig. 1 in einem starren Halter eines Schweissgerätes,
Fig. 4 zeigt ein angeschweisstes Befestigungselement gemäss Fig. 1 mit einem umgebenden Montageteil,
Fig. 5 zeigt ein weiteres, angeschweisstes Befestigungselement mit einem daran befestigten Montageteil,
Fig. 6 zeigt ein weiteres, angeschweisstes Befestigungselement mit einem daran befestigten Montageteil,
Fig. 7 zeigt im Schnitt eine weitere Ausführungsvariante eines Befestigungselementes, mit Aussengewinde,
Fig. 8 zeigt im Schnitt eine weitere Ausführungsvariante eines Befestigungselementes mit Federring,
Fig. 9 zeigt ein weiteres Ausführungsbeispiel eines Befestigungselementes mit inneren Haltekrallen,
Fig. 10 zeigt ein Befestigungselement mit äusseren Haltekrallen mit einem daran befestigten Montageteil,
Fig. 11 zeigt ein Befestigungselement gemäss Fig. 1 mit einem daran befestigten Montageteil,
Fig. 12 zeigt ein Befestigungselement gemäss Fig. 1 mit einem daran befestigten Montageteil,
Fig. 13 zeigt eine Ausführungsvariante zum Befestigungselement gemäss Figur 1,
Fig. 14 zeigt ein Ausführungsbeispiel eines elektrischen Anschlusses mit dem erfindungsgemässen Befestigungselement,
Fig. 15 zeigt eine Anordnung zum Messen der Schweissgüte,
Fig. 16 zeigt eine weitere Befestigungsart eines Montageteils,
die Figuren 17 und 18 zeigen zwei Ausführungsvarianten zu einem Teil gemäss Fig. 16,
Fig. 19 zeigt ein weiteres Montageteil,
Fig. 20 zeigt eine weitere Ausführungsvariante eines Befestigungselements und ein dazugehöriges Montageteil, und
Fig. 21 zeigt einen Querschnitt eines anderen Ausführungsbeispiels eines Befestigungselements.

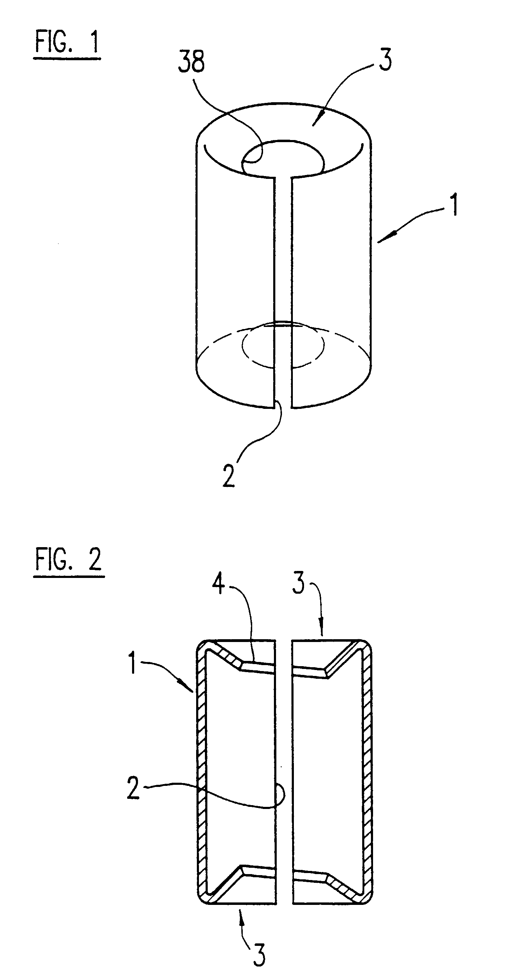

In den Fig. 1 und 2 ist ein erstes, als Schweissbolzen ausgebildetes Befestigungselement 1 dargestellt, das als federnde Hülse ausgebildet ist, und das einen Längsschlitz 2 aufweist. Wie aus Fig. 2 hervorgeht, ist dieses Befestigungselement axial symmetrisch ausgeführt und beide Stirnseiten 3 trichterförmig nach innen ausgebildet. Die Stirnseiten sind jedoch nicht radial-symmetrisch ausgebildet, sondern derart gestaltet, dass die Innenkanten 4 der Stirnseiten ein gewindeähnliches Profil aufweisen. Durch die hülsenförmige, geschlitzte Ausbildung des Befestigungselementes weist dieses - bei geeigneter Materialwahl - eine grosse Federkraft auf, die vielfache Vorteile bringt. Die daran befestigbaren Montageteile weisen in der Regel eine relativ grosse Streuung der Toleranzen auf, so dass die erforderliche Flexibilität bei den starren Bolzen alleine von den Bauteilen aus Kunststoff oder Metall aufgebracht werden müssen. Dies hat den Nachteil, dass die durch das Montageteil übertragenen Kräfte gering sind. Die übertragbaren Kräfte von einem flexiblen Befestigungselement auf ein Montageteil sind somit wesentlich höher. Ausserdem besitzen die aus Vollmaterial gefertigten Schweissbolzen ein hohes Gewicht, das bei der Menge der zur Anwendung gelangenden Schweissbolzen in einem Automobil zu einem nicht vernachlässigbaren Gesamtgewicht führt.

Die Notwendigkeit, bei einem vollen Schweissbolzen die gesamte Fläche anzuschweissen führt dazu, dass die dadurch entstehende grosse Schweissfläche in einem ungünstigen Verhältnis zur Dicke des Bleches steht. Dadurch erfährt dünnes Blech eine starke Auf- und Durchwärmung im Schweissbereich, was zu einer Schwächung der Festigkeit in der Randzone des Bolzens zum Blech führt. Diese Nachteile werden durch das Befestigungselement gemäss den Fig. 1 und 2 beseitigt, da nur ringförmige Anschweisszonen und ähnlich gleiche Materialstärken vorhanden sind.

Wie bereits eingangs erwähnt, führt die symmetrische Ausgestaltung des Befestigungselementes dazu, dass diese nur axial gerichtet in die Zuleitung gebracht werden müssen, und keiner lagerichtigen Vorsortierung bedürfen. Dies vereinfacht die Sortiereinrichtung und erhöht deren Zuverlässigkeit.

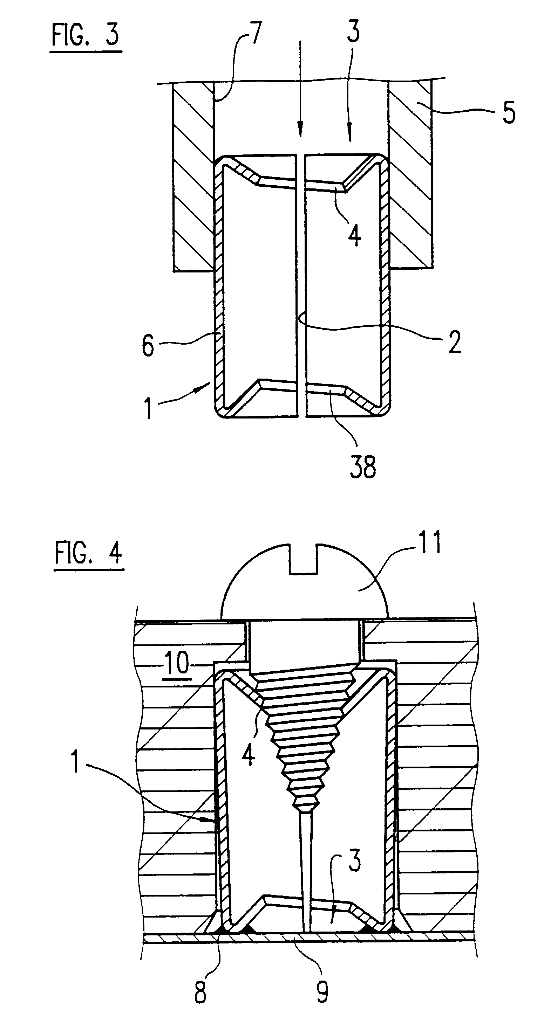

Wie erwähnt, liegt ein weiterer, bedeutsamer Vorteil des federnden, hülsenförmigen Befestigungselementes darin, dass das Schweissgerät wesentlich vereinfacht werden kann. Da das Befestigungselement federnd ausgestaltet ist, genügt es, anstatt einer geschlitzten Spannzange mit dem komplizierten Betätigungsmechanismus, als Halter ein starres Rohr zu verwenden. Dies ergibt nicht nur eine wesentliche Vereinfachung des Schweissgerätes, sondern auch eine wesentliche Erhöhung seiner Zuverlässigkeit. In Fig. 3 ist beispielhaft das Befestigungselement 1 gemäss Fig. 1 in einem Rohr 5 dargestellt. Die vorbekannte und übliche Zuführung der Befestigungselemente mittels flexibler Leitungen und Druckluft kann hier beibehalten werden, wobei, wie bereits erwähnt, die Befestigungselemente nur axial ausgerichtet werden müssen. Der Schweissvorgang als solcher bleibt auch der gleiche, so dass vorbekannte Anlagen verwendet werden können, an denen statt der komplexen Halterung mit beweglichen Spannzangen ein Halterrohr verwendet werden kann, das axial verschiebbar ist. Selbstverständlich muss der Druckluftimpuls, der nötig ist, um das Befestigungselement axial im Zuführrohr 5 in die Ausgangsstellung zu bringen, nach Grösse und Länge geeignet ausgewählt werden. Die durchgehende Oeffnung 38 des Befestigungselementes erlaubt es, ein Schutzgas an die Schweissstelle zu führen. Sowohl die Mantelfläche 6 des Befestigungselementes, als auch die innere Oberfläche 7 des Halters sind glatt ausgeführt, um eine möglichst störungsfreie axiale Zuführung und einen grossflächigen Kontakt zur Schweissstromübertragung zu gewährleisten, wobei das Material sowie der Durchmesser der Bohrung des Befestigungselementes bei der Auslegung und Berechnung des äusseren Durchmessers des Befestigungselementes und des Innen-Durchmessers des rohrförmigen Halters eine Rolle spielen, um eine entsprechende Vorspannung zu erreichen.

In Fig. 4 ist das angeschweisste Befestigungselement 1 gemäss Fig. 1 mit dem umgebenden Montageteil 10 dargestellt. Das Befestigungselement 1 ist über eine Schweissstelle 8 mit einem Bauteil 9, beispielsweise ein Karosserieblech eines Automobiles, verschweisst. Das Montageteil 10, beispielsweise aus Kunststoff, ist mittels einer Schraube 11 befestigt, die direkt in das Gewinde 4 des Befestigungselementes gedreht werden kann. Da das Befestigungselement auch nach seinem Anschweissen im oberen Bereich federnd ist, kann bereits beim Anpressen des Montageteiles eine Klemmwirkung erzielt werden, um nach dem Befestigen mittels der Schraube eine feste Verbindung zu ergeben.

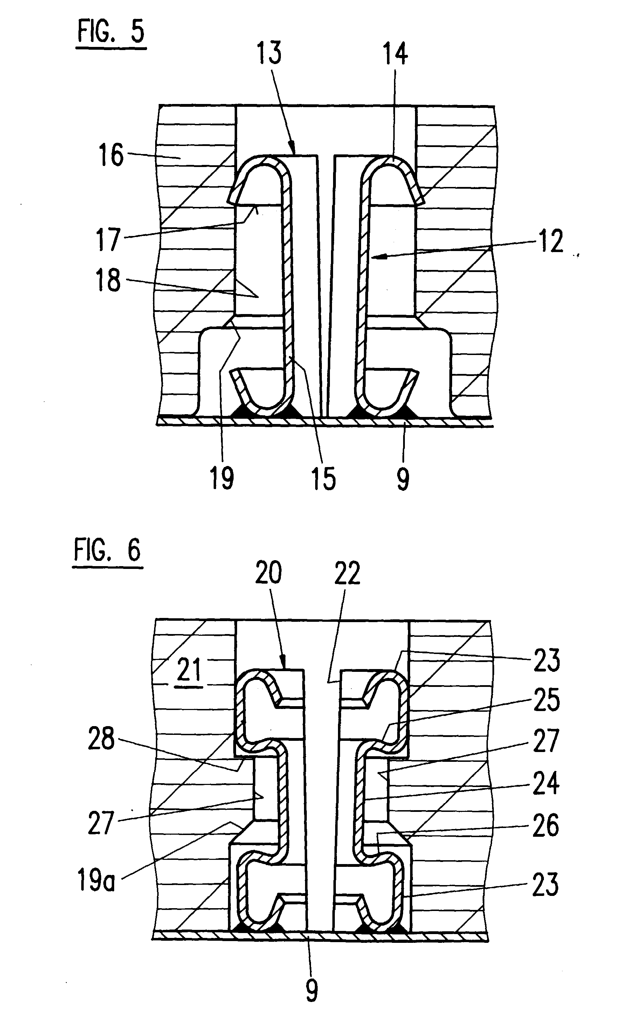

In Fig. 5 ist ein weiteres Befestigungselement 12 dargestellt, das ebenfalls hülsenförmig und federnd ausgebildet ist und einen Längsschlitz aufweist, wobei jedoch die beiden Stirnflächen 13 nach aussen U-förmig gebogene Ränder 14 aufweisen. Diese Ränder 14, die von der Zylinderwand 15 abstehen, können eine Klemm- und Rückhaltewirkung entfalten. Zweckmässig weist dabei dieses Montageelement 16 an seiner Bohrung 18 eine Anschrägung 19 auf, um den gebogenen Rand 14 des Befestigungselementes besser überwinden zu können. Die beiden Aussenseiten des umgebogenen Randes 14 müssen derart beschaffen sein, dass sie eine genügend grosse Kontaktfläche zwischen dem Befestigungselement und dem Halter schaffen.

In Fig. 6 ist ein weiteres Befestigungselement 20 dargestellt, das durch seine Formgebung ein Montageelement 21 schon alleine durch Klemmwirkung zurückhalten kann. Das Befestigungselement 20 weist die gleichen Stirnflächen 3 und einen Längsschlitz 22 auf. Die Mantelfläche des Befestigungselementes ist nicht eben gestaltet, sondern weist zwei gleiche Endteile 23 und ein Mittelteil 24 auf, das einen kleineren Durchmesser aufweist als die Endteile. Dadurch entstehen aussen zwei Absätze 25 und 26, wovon der eine, Absatz 25, beim angeschweissten Befestigungselement zum Zurückhalten des Montageelementes dient. Das Montageelement 21 weist einen dem eingeschnürten Mittelteil 24 des Befestigungselementes entsprechenden Kragen 27 auf, dessen in der Zeichnung oberen Kante 28 den Absatz 25 hintergreift. Zwecks besseren Einführens des Montageelementes ist die untere Kante 19a abgeschrägt. Aus der Zeichnung ist ersichtlich, dass die angeschrägte Kante und der Kragen den oberen Teil des Befestigungselementes beim Einführen zusammendrückt und dieser obere Endteil anschliessend wieder auseinandergeht, um das Montageelement festzuhalten.

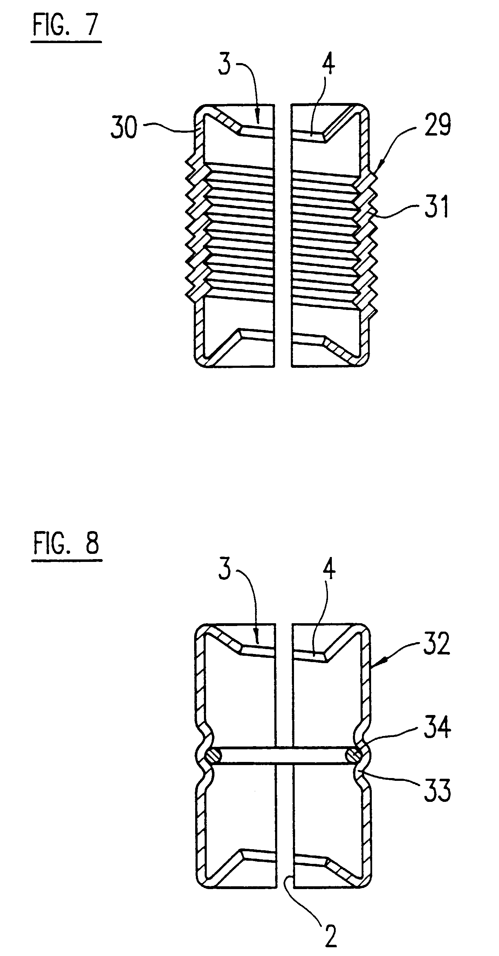

Das Befestigungselement 29 gemäss Fig. 7 weist die gleichen Stirnseiten 3 auf wie das Befestigungselement gemäss Fig. 1 und auch die oberen, endseitigen Teile 30 sind gleich wie bei jenem Befestigungselement gearbeitet. Das Mittelteil 31 hingegen ist als schraubenähnliches Gewinde ausgebildet. Zu beachten ist, dass das Befestigungselement 29 gemäss Fig. 7 entweder innen eine Schraube und/oder aussen eine Schraube, resp. Mutter, aufnehmen kann.

Das Befestigungselement 32 gemäss Fig. 8 ist bis auf seinen Mittelteil gleich aufgebaut wie dasjenige gemäss Fig. 1. Das Mittelteil 33 des Befestigungselementes 32 ist S-förmig gestaltet, um innen einen federnden Klemmring 34 aufzunehmen, dessen Bedeutung für das Fixieren eines Montageelementes klar ersichtlich ist.

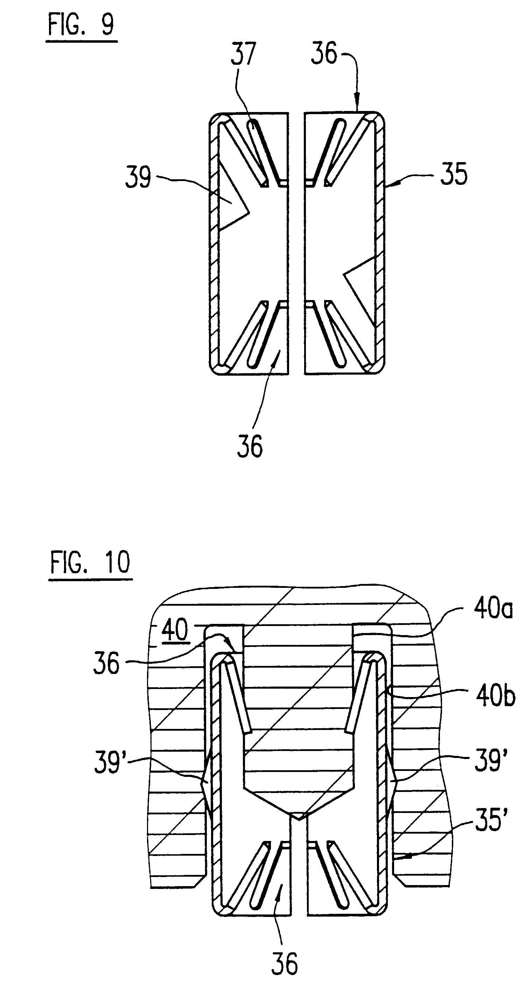

Das Befestigungselement 35 von Fig. 9 ist ein weiteres Ausführungsbeispiel. Jede Stirnseite 36 ist mit Einschnitten 37 versehen, wodurch sie federnd ausgebildet ist. Dadurch können nicht nur Schrauben mit Gewinde in der Bohrung 38 aufgenommen werden, sondern auch Pfosten oder dergleichen ohne Schraubengewinde, die durch die Klemmwirkung festgehalten werden können. Dieses Befestigungselement weist ebenfalls einen Schlitz auf. Zusätzlich sind Haltekrallen 39 axial versetzt aus dem Mantel des Befestigungselementes freigeschnitten und nach innen gebogen. Je nachdem ein Pfosten von der einen oder anderen Seite in das Befestigungselement eingeführt wird, greift die eine oder andere Kralle 39 in denselben ein und sichert ihn zusätzlich.

Fig. 10 zeigt ein ähnliches Befestigungselement 35' wie Fig. 9, jedoch sind Haltekralle 39' nach aussen gebogen. Beim Aufsetzen eines Montageelementes 40 mit einem Pfosten 40a greifen die Krallen 39' in die Bohrungswand 40b des Montageelementes ein und sichern dasselbe zusätzlich.

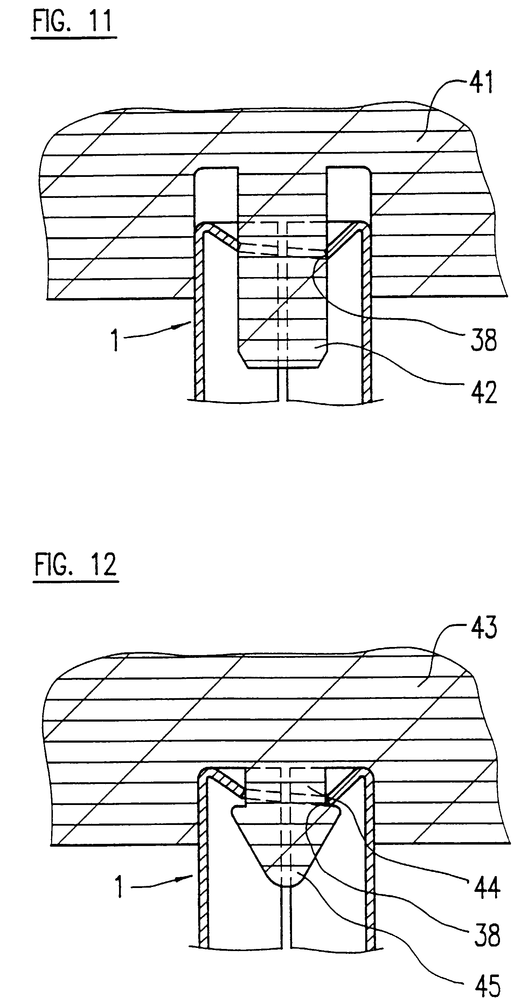

In Fig. 11 ist veranschaulicht, dass bei der Verwendung eines Montageteils 41 mit einem in die Bohrung 38 eines Befestigungselementes 1 hineinragenden Pfosten 42, das Umschliessen des Befestigungselementes 1 durch das Montageteil die Rückhaltekraft der Bohrungswand wesentlich erhöht.

In Fig. 12 ist ein weiteres Montageteil 43 mit einem Pfosten 44 mit einem formschlüssigen Widerhaken 45 dargestellt, der ein hohes Rückhaltevermögen aufweist.

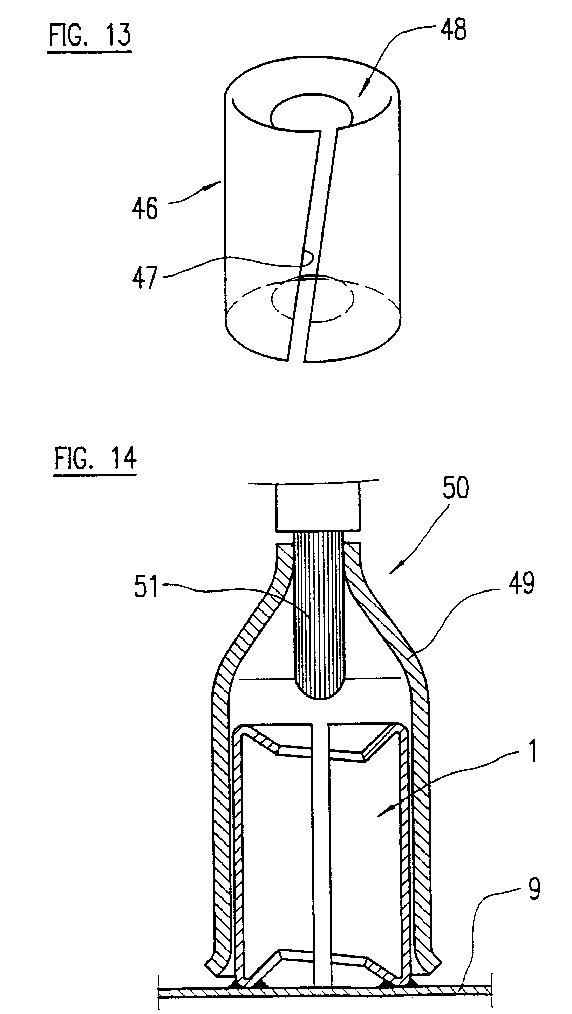

In Figur 13 ist veranschaulicht, dass der Begriff "Längsschlitz" nicht notwendigerweise einen Schlitz parallel zur Längsachse des Befestigungselementes bedeutet. Das Befestigungselement 46 weist einen Längsschlitz 47 auf, der bezüglich der Längsachse des Elementes geneigt ist. Die übrigen Teile des Elementes mit den Stirnflächen 48 sind gleich wie beim Element gemäss Figur 1.

In Figur 14 ist die Möglichkeit angegeben, ein erfindungsgemässes Befestigungselement als elektrischen Anschluss zu verwenden, wobei es sich im Prinzip um ein Element gemäss Figur 1 oder 13 handeln kann. Das Element 1 ist auf einer leitenden Unterlage 9 angeschweisst und dient als männlicher Steckerteil, über den das weibliche Kontaktteil 49 einer entsprechend geformten Kabelkontaktschelle 50 mit dem Kontaktstift 51 gesteckt werden kann. Durch die Verwendung eines zylindrischen oder annähernd zylindrischen, federnden Elementes ist ein automatisches und wirkungsvolles Anschliessen möglich, was mit Flachsteckern nicht möglich ist.

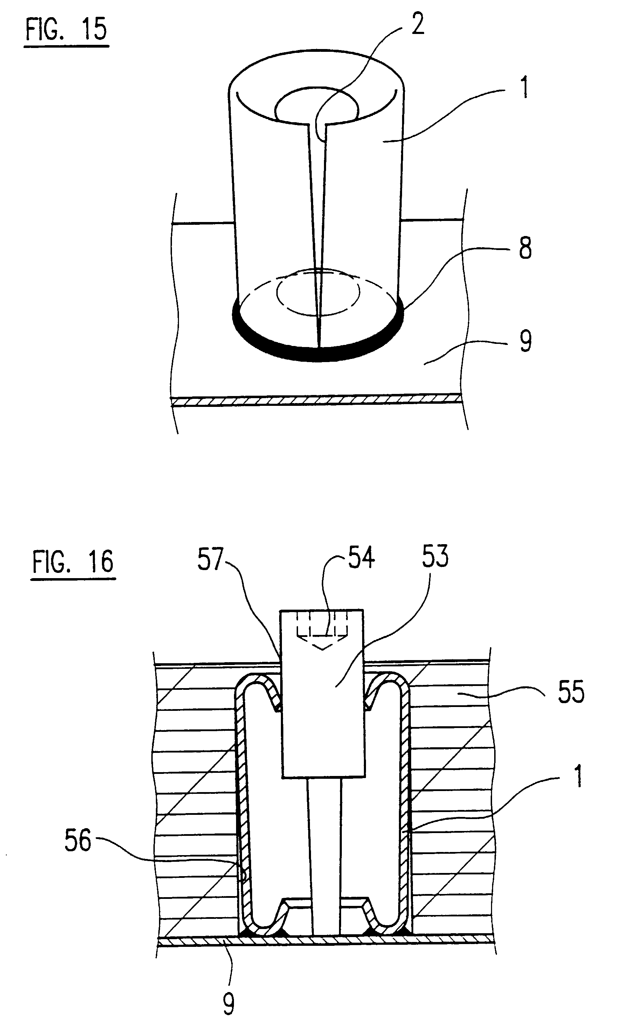

Gemäss Figur 15 ist es möglich, die mechanische Güte der Schweissnaht 8 auf der Unterlage 9 zu prüfen. Da das Befestigungselement 1 einen Schlitz 2 aufweist und es zusammengedrückt angeschweisst wird hat dieses die Tendenz, sich nachher zu entspannen. Falls die Schweissnaht nicht gut ist, wird die Breite des Schlitzes 2 anders verlaufen als bei einer guten Schweissnaht. Es ist daher möglich, durch beispielsweise optische Ueberprüfung des Verlaufes des Schlitzes auf die Güte der Schweissnaht zu schliessen.

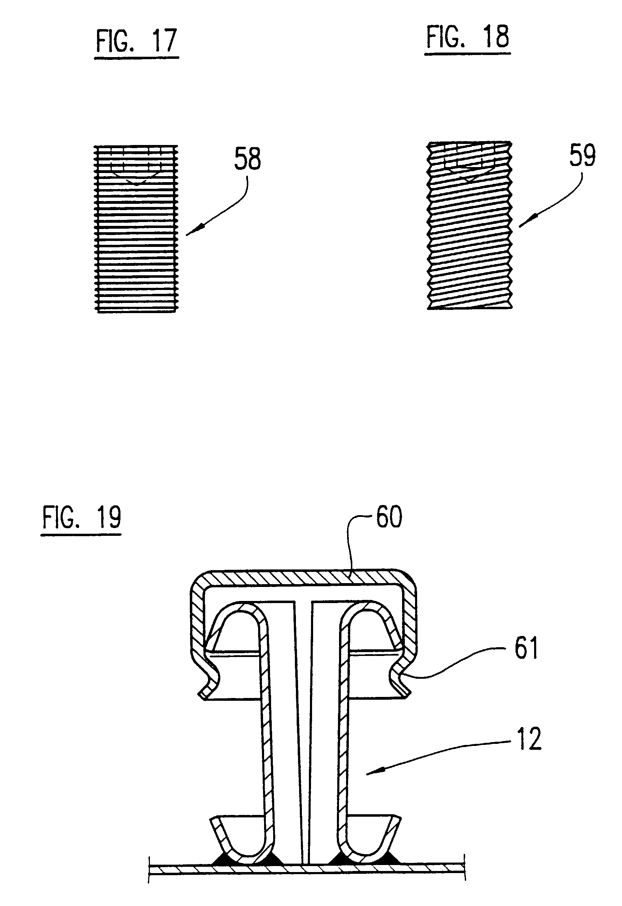

Figur 16 zeigt ein Verriegelungselement in Form eines Spreizstiftes 53, der in die Oeffnung 38 eines Befestigungselementes gemäss Figur 1 passt und dessen Länge kleiner ist als der kleinste Abstand zwischen den Stirnflächen 3 des Befestigungselementes. Durch Hineinstossen des Stiftes in das Innere des Befestigungselementes kann die Verriegelung aufgehoben werden. Zum besseren Handhaben des Spreizstiftes weist dieser mindestens an einem Ende einen Schlitz oder Innensechskant 54 oder dergleichen auf. Mit diesem Spreizstift kann ein Montageelement 55 mit Sackloch 56 und kleinerer Oeffnung 57 für den Spreizstift aufgesteckt, verriegelt und entriegelt werden. Anstatt einem Spreizstift 53 mit einer glatten Oberfläche kann auch ein Stift mit gerillter oder als Gewinde ausgebildeter Oberfläche verwendet werden, um entweder eine bessere Retention oder ein Hinein- oder Herausdrehen des Spreizstiftes zu ermöglichen.

Figur 19 verdeutlicht, dass die Verwendung eines federnden Befestigungselementes die Möglichkeit eröffnet, auf ein solches gemäss Figur 5 ein starres Stück, beispielsweise eine starre Kappe 60 mit einem Innenwulst 61 aufzusetzen. Die Kappe selbst kann bereits ein Montageelement darstellen oder mit einem solchen verbunden sein.

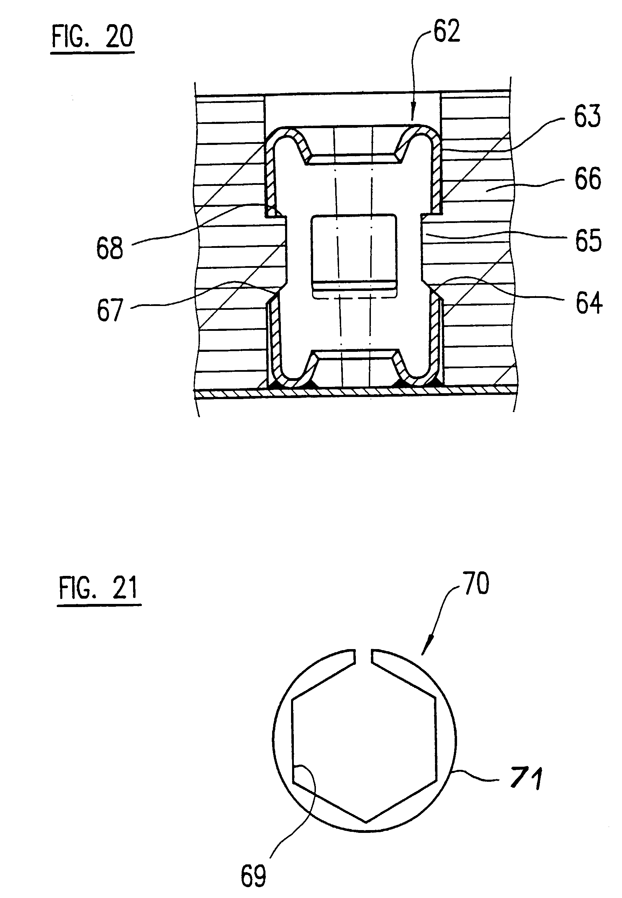

Figur 20 zeigt ein weiteres Ausführungsbeispiel eines Befestigungselementes. Das Befestigungselement 62 weist in seiner Hülsenwand 63 Fenster 64 auf, in die entsprechende Vorsprünge 65 am Montageelement 66 ragen und dieses verriegeln. Zwecks besserem Hineingleiten und Verriegeln weisen die Vorsprünge unten, zur Unterlage 9 hin, Abschrägungen 67 und nach oben hin einen Absatz 68 auf. Zum Entriegeln könnten nicht gezeigte Oeffnungen im Montageelement angebracht sein, in die ein entsprechend geformtes Werkzeug passt, um das Befestigungselement zusammenzudrücken.

Figur 21 zeigt, dass die Innenfläche 69 der Hülsenwand eines Befestigungselementes 70 anstatt zylindrisch mehreckig, z. B. sechs-eckig sein kann, um einen Verdrehschutz zu bieten, während die Aussenfläche 71 hier zylindrisch ist. Bei entsprechender Anpassung der Schweisspistole ist es auch denkbar, die Aussenfläche der Hülsenwand mehreckig, z. B. sechs-eckig zu gestalten.

Während in den Zeichnungen die Wandung der Längswand der Befestigungselemente gleichmässig dick dargestellt ist, können Teile davon, insbesondere das Mittelteil, eine geringere Dicke aufweisen als die übrigen Teile.

Es wurden eine Reihe von verschiedenen Befestigungselementen angegeben, die jedoch nicht erschöpfend behandelt worden sind. So lassen sich aus den Beispielen weitere Möglichkeiten kombinieren, wobei jedoch die wesentlichen Merkmale des Befestigungselementes, d.h. die Ausbildung als Hülse und die federnde Eigenschaft der Hülsenwandung, bei allen Elementen vorkommen. Als Anwendungsbeispiel wurde die Automobilindustrie erwähnt, doch sind andere Anwendungsgebiete ebenfalls dafür geeignet, beispielsweise im Apparatebau.

## Patentansprüche

1. Schweissbolzen, der durch Lichtbogenschweissung mit einer Stirnseite (3, 13, 36, 48) an ein Bauteil (9) anschweissbar ist, dadurch gekennzeichnet, dass er als radial federnde Hülse (1, 12, 20, 29, 32, 35, 46, 62, 70) mit einem Längsschlitz (2, 22, 47) ausgebildet ist, der sein Zusammenfedern erlaubt.

2. Schweissbolzen nach Anspruch 1, dadurch gekennzeichnet, dass der Längsschlitz (2, 22; 47) durchgehend ist und parallel oder geneigt zur Längsachse des Schweissbolzens verläuft.

3. Schweissbolzen nach Anspruch 1 oder 2, dadurch gekennzeichnet, dass seine beiden Stirnseiten (3, 13, 36, 48) gleich ausgeführt sind, um ein lagerichtiges Vorsortieren im Schweissgerät zu vermeiden.

4. Schweissbolzen nach einem der Ansprüche 1 bis 3, dadurch gekennzeichnet, dass die Stirnseite (3, 13, 36, 48) trichterförmig nach Innen und schraubengewindeförmig (4) ausgebildet sind.

5. Schweissbolzen nach einem der Ansprüche 1 bis 4, dadurch gekennzeichnet, dass die Stirnseite (13) einen U-förmig nach aussen gebogenen Rand (14) aufweist, der als Rückhalteteil für Montageelemente (16) dient.

6. Schweissbolzen nach einem der Ansprüche 1 bis 5, dadurch gekennzeichnet, dass seine Längswand aus zwei Endteilen (23) und einem engeren Mittelteil (24) besteht, wobei einer der dadurch entstandenen Absätze (25) als Rückhalteteil für ein Montageelement (21) dient.

7. Schweissbolzen nach einem der Ansprüche 1 bis 6, dadurch gekennzeichnet, dass der mittlere Teil der Längswand des Schweissbolzenes (29) als Schraubengewinde (31) ausgebildet ist.

8. Schweissbolzen nach einem der Ansprüche 1 bis 7, dadurch gekennzeichnet, dass etwa die Mitte (33) seiner Längswand eineinhalb-S-förmig ausgebildet ist und im Innern ein Klemmring (34) angeordnet ist.

9. Schweissbolzen nach einem der Ansprüche 1 bis 8, dadurch gekennzeichnet, dass die nach innen weisenden Stirnflächen (36) des Schweissbolzenes (35) geschlitzt sind.

10. Schweissbolzen nach einem der Ansprüche 1 bis 9, dadurch gekennzeichnet, dass an der Längswand mindestens eine innere oder äussere Kralle (39, 39') angeordnet ist.

11. Schweissbolzen nach einem der Ansprüche 1 bis 10, dadurch gekennzeichnet, dass die Längswand im mittleren Teil eine geringere Dicke aufweist als gegen die Stirnflächen hin.

12. Schweissbolzen nach einem der Ansprüche 1 bis 11, dadurch gekennzeichnet, dass seine Hülsenwand (63) Fenster (64) aufweist.

13. Schweissbolzen nach einem der Ansprüche 1 bis 12, dadurch gekennzeichnet, dass die Aussenfläche (71) der Hülsenwand des Schweissbolzens (70) zylindrisch und die Innenfläche (69) der Hülsenwand mehreckig, insbesondere sechs-eckig ausgebildet ist.

14. Schweissgerät zum Anschweissen von länglichen Befestigungselementen, insbesondere Schweissbolzen, mit einem Zuführungskanal und einem axial verschiebbaren Halter für die Befestigungsdelemente, dadurch gekennzeichnet, dass anstelle einer Spannzange der axial verschiebbare Halter (5) als starres Rohr ausgebildet ist, in dem das als flexible Hülse (1, 12, 20, 29, 32, 35) ausgebildete Befestigungselement geführt ist.

15. Schweissgerät nach Anspruch 14, dadurch gekennzeichnet, dass durch die Mitte (38) des Befestigungslementes Schutzgas bis zur Schweissstelle geführt wird.

16. Verfahren zum Betrieb des Schweissgerätes nach Anspruch 14 für Schweissbolzen nach Anspruch 3, dadurch gekennzeichnet, dass die Schweissbolzen ohne vorherige lagerichtige Vorsortierung in die Zuführung eingespeist und dem Halter zugeführt werden, worin sie mittels eines Druckluftimpulses im starren Rohr in die Ausgangsstellung zum Hinführen und Anschweissen an das Bauteil gebracht werden.

17. Verfahren zur Befestigung eines Montageteils auf ein Befestigungselement mit folgenden Schritten:
- ein als federnde Hülse (1, 12, 20, 29, 32, 35, 46, 62, 70) ausgebildetes Befestigungslement wird einem Bauteil zugeführt, unter Ausnutzung seiner federnden Eigenschaft elektrisch kontaktiert, gehalten und durch Lichtbogenschweissung angeschweisst,
- das Montageteil (10, 16, 21, 40, 41, 43, 50, 55, 60, 66) wird unter Ausnutzung der federnden Eigenschaft des Befestigungselementes kraft-und/oder formschlüssig mit dem Befestigungselement verbunden.

18. Verfahren nach Anspruch 17, dadurch gekennzeichnet, dass das Montageteil (16, 21) in seiner Bohrung (18, 27) von an der Aussenwand des Befestigungselements (12, 20) angebrachten Rückhalteteilen (14, 23) hintergriffen wird.

19. Verfahren nach Anspruch 17 oder 18, dadurch gekennzeichnet, dass das Montageteil (21) in seiner Bohrung (27) einen Absatz (28) aufweist, um an der Aussenwand des Befestigungselements (20) angebrachte Rückhalteteile (23) zu hintergreifen.

20. Verfahren nach einem der Ansprüche 17 bis 19, dadurch gekennzeichnet, dass das Montageteil (40) einen Pfosten (40a) und/oder eine Bohrung (40b) aufweist, in den bzw. die beim Aufsetzen des Montageteils (40) Krallen (39, 39') eingreifen, um das Montageteil zu sichern.

21. Verfahren nach einem der Ansprüche 17 bis 20, dadurch gekennzeichnet, dass das Montageteil (41) einen in die Bohrung (38) des Befestigungselements (1) ragenden Pfosten (42) aufweist und formschlüssig das Befestigungselement (1) umschliesst, um die Rückhaltekraft der Wandung der Bohrung (38) auf den Pfosten zu erhöhen.

22. Verfahren nach einem der Ansprüche 17 bis 21, dadurch gekennzeichnet, dass das Montageteil (43) einen Pfosten (44) mit einem formschlüssigen Widerhaken (45) aufweist.

23. Verfahren nach einem der Ansprüche 17 bis 22, dadurch gekennzeichnet, dass das Montageteil eine Kabelkontaktschelle (50) ist, deren weibliches Kontaktteil (49) das freie Ende des angeschweissten Befestigungselements (1, 46) umfasst.

24. Verfahren nach einem der Ansprüche 17 bis 18, dadurch gekennzeichnet, dass das Montageteil (55) ein Sackloch (56) zur Aufnahme des Befestigungselements (1, 46) und eine konzentrische, kleinere Oeffnung (57) zur Aufnahme eines in das Befestigungselement hineinreichenden Spreizstiftes (53) aufweist, der eine Länge besitzt, die kleiner als der kleinste Abstand zwischen den Stirnflächen des Befestigungselements ist.

25. Verfahren nach Anspruch 24, dadurch gekennzeichnet, dass der Spreizstift (53) mindestens an einem Ende einen Schlitz oder Innensechskant (54) und eine glatte, eine gerippte (58) oder als Gewinde (59) ausgebildete Mantelfläche aufweist.

26. Verfahren nach einem der Ansprüche 17 bis 22, dadurch gekennzeichnet, dass das Montageteil aus einer starren Kappe (60) mit Innenwulst (61) besteht oder eine solche enthält, die auf ein Befestigungselement (12) mit nach aussen U-förmig gebogenen Rändern gesetzt wird.

27. Verfahren nach einem der Ansprüche 17 bis 22, dadurch gekennzeichnet, dass das Montageteil (66) eine Bohrung mit in die Bohrung hineinragenden Vorsprüngen (65) aufweist, die in entsprechend geformte Fenster (64) in der Hülsenwand (63) des Befestigungselements (62) einschnappen.

28. Verfahren nach Anspruch 27, dadurch gekennzeichnet, dass die Vorsprünge (65) nach unten, zur Unterlage (9) hin, Abschrägungen (67) und nach oben hin einen Absatz (68) aufweisen.

29. Verfahren nach einem der Ansprüche 17 bis 28, dadurch gekennzeichnet, dass die Aussenfläche (71) der Hülsenwand des Befestigungselements (70) zylindrisch und die Innenfläche der Hülsenwand mehreckig, insbesondere sechseckig ist.

## Claims

1. Welding stud which is weldable by arc welding by one end face to a component (9), characterized in that it is in the form of a radially resilient sleeve (1, 12, 20, 29, 32, 35, 46, 62, 70) comprising a longitudinal slit (2, 22, 47) to permit its resilient compression.

2. Welding stud according to claim 1, characterized in that the longitudinal slit (2, 22; 47) is continuous and extends parallel with, or inclined with respect to, the longitudinal axis of the welding stud.

3. Welding stud according to claim 1 or 2, characterized in that its two end faces (3, 13, 36, 48) are identical in construction, in order to avoid previous sorting to ensure correct position in the welding assembly apparatus.

4. Welding stud according to any one of claims 1 to 3, characterized in that the end faces (3, 13, 36, 48) are hopper-shaped, narrowing towards the interior, and are in the form of screw threads (4).

5. Welding stud according to any one of claims 1 to 4, characterized in that the end face (13) has an edge (14) bent outwardly in a 'U' shape, and which serves as a retaining portion for assembly parts (16).

6. Welding stud according to any one of claims 1 to 5, characterized in that its longitudinal wall comprises two end portions (23) and a narrower central portion (24), one of the projections (25) resulting therefrom serving as a retaining portion for an assembly part (21).

7. Welding stud according to any one of claims 1 to 6, characterized in that the central portion of the longitudinal wall of the welding stud (29) is in the form of a screw thread (31).

8. Welding stud according to any one of claims 1 to 7, characterized in that approximately the central portion (33) of its longitudinal wall is in the shape of an one-and-a-half S, and a clamp ring (34) is disposed within the interior.

9. Welding stud according to any one of claims 1 to 8, characterized in that the end faces (36) of the welding stud (35) which face inwards are slitted.

10. Welding stud according to any one of claims 1 to 9, characterized in that at least one internal or external claw (39, 39') is provided on the longitudinal wall thereof.

11. Welding stud according to any one of claims 1 to 10, characterized in that the longitudinal wall has a lesser thickness in its central portion than towards the end faces.

12. Welding stud according to any one of claims 1 to 11, characterized in that its sleeve wall (63) has windows (64).

13. Welding stud according to any one of claims 1 to 12, characterized in that the external surface (71) of the sleeve wall of the welding stud (70) is cylindrical, and the internal surface (69) of the sleeve wall is polygonal, in particular hexagonal.

14. Welding assembly apparatus for welding on elongate fasteners, in particular welding studs, with a feed channel and an axially displaceable holder for the fasteners, characterized in that the axially displaceable holder (5), instead of being a collet chuck, is in the form of a rigid tube, in which the fastener, in the form of a flexible sleeve (1, 12, 20, 29, 32, 35), is guided.

15. Welding assembly apparatus according to claim 14, characterized in that protective gas is supplied through the centre (38) of the fastener as far as the point of welding.

16. Method of operating the welding assembly apparatus according to claim 14 for welding studs according to claim 3, characterized in that the welding studs, without previous sorting to ensure correct positioning, are inserted and fed to the holder, wherein they are brought into their initial position for advancing and welding to the component, by means of a pulse of compressed air.

17. Method for securing an assembly part on a fastener, comprising the following steps:
- a fastening element in the form of a resilient sleeve (1, 12, 20, 29, 32, 35, 46, 62, 70) is fed to a component, electrically contacted by virtue of its resilient property, maintained and welded on by arc welding, and
- the assembly part (10, 16, 21, 40, 41, 43, 50, 55, 60, 66) is mounted on the fastener in a frictionally and positively engaging manner by virtue of the resilient property of the fastener.

18. Method according to claim 17, characterized in that retaining parts (14, 23) attached to the external wall of the fastener (12, 20) engage behind the assembly part (16, 21) in its bore (18, 27).

19. Method according to claim 17 or 18, characterized in that the assembly part (21) has in its bore (27) a projection (28) in order to engage behind retaining parts (23) provided at the external wall of the fastener (20).

20. Method according to any one of claims 17 to 19, characterized in that the assembly part (40) has a post (40a) and/or a bore (40b) into which, during mounting of the assembly part (40), claws (39, 39') engage, in order to secure the assembly part.

21. Method according to any one of claims 17 to 20, characterized in that the assembly part (41) has a post (42) projecting into the bore (38) of the fastener (1), and surrounds the fastener (1) in a positively engaging manner, in order to increase the retaining force of the wall of the bore (38) acting on the post.

22. Method according to any one of claims 17 to 21, characterized in that the assembly part (43) has a post (44) with a positively engaging barb (45).

23. Method according to any one of claims 17 to 22, characterized in that the assembly part is a cable contact terminal (50), the female contact portion (49) of which surrounds the free end of the welded-on fastener (1, 46).

24. Method according to any one of claims 17 to 18, characterized in that the assembly part (55) has a blind hole (56) for receiving a fastener (1, 46) and a concentric, smaller opening (57) for receiving a spreader pin (53) extending into the fastener, said spreader pin (53) having a length which is less than the smallest distance between the end faces of the fastener.

25. Method according to claim 24, characterized in that the spreader pin (53) has at least at one end a slit or internal hexagon (54), and an outer surface which is smooth, grooved (58) or in the form of a thread (59).

26. Method according to any one of claims 17 to 22, characterized in that the assembly part comprises a rigid cap (60) with internal bead (61), or includes one such, which can be mounted on a fastener (12) with edges bent outwards in a 'U' shape.

27. Method according to any one of claims 17 to 22, characterized in that the assembly part (66) has a bore with projections (65) projecting into said bore, said projections engaging with a snap action in correspondingly-shaped windows (64) in the sleeve wall (63) of the fastener (62).

28. Method according to claim 27, characterized in that the projections (65) have, towards the base (9), bevels (67) and, towards the top, a step (68).

29. Method according to any one of claims 17 to 28, characterized in that the external surface (71) of the sleeve wall of the fastener (70) is cylindrical, and the internal surface of the sleeve wall is polygonal, particularly hexagonal.

## Revendications

1. Cheville à souder dont une face (3, 13, 36, 48) est soudable à un élément de construction (9) par soudage à l'arc, caractérisée en ce qu'elle présente la forme d'une douille (1, 12, 20, 29, 32, 35, 46, 62, 70) radialement élastique comprenant une fente longitudinale (2, 22, 47) permettant sa compression élastique.

2. Cheville à souder selon la revendication 1, caractérisée en ce que ladite fente longitudinale (2, 22; 47) est traversante, et qu'elle est parallèle ou inclinée par rapport à l'axe longitudinal de la cheville à souder.

3. Cheville à souder selon la revendication 1 ou 2, caractérisée en ce que ses deux faces (3, 13, 36, 48) sont égales pour éviter un triage de positionnement préalable dans l'appareil à souder.

4. Cheville à souder selon l'une des revendications 1 à 3, caractérisée en ce que ses faces (3, 13, 36, 48) s'étendent vers l'intérieur en entonnoir et présentent la forme d'un taraudage (4).

5. Cheville à souder selon l'une des revendications 1 à 4, caractérisée en ce que sa face (13) présente un bord (14) replié vers l'extérieur en forme de U qui sert de retenue pour des éléments de montage (16).

6. Cheville à souder selon l'une des revendications 1 à 5, caractérisée en ce que sa paroi longitudinale est composée de deux parties extrêmes (23) et d'un partie centrale (24) plus étroite (24), l'un des épaulements (25) ainsi formés servant de retenue pour un élément de montage (21).

7. Cheville à souder selon l'une des revendications 1 à 6, caractérisée en ce que la partie centrale de la paroi longitudinale de la cheville à souder (29) présente la forme d'un filetage.

8. Cheville à souder selon l'une des revendications 1 à 7, caractérisée en ce que le centre (33) approximatif de sa paroi longitudinale présente la forme d'un S et demi, et qu'un anneau de serrage (34) est disposé à l'intérieur.

9. Cheville à souder selon l'une des revendications 1 à 8, caractérisée en ce que les faces (36) de la cheville à souder (35), qui s'étendent vers l'intérieur, sont fendues.

10. Cheville à souder selon l'une des revendications 1 à 9, caractérisé en ce que sa paroi longitudinale comporte au moins un crampon intérieur ou extérieur (39, 39').

11. Cheville à souder selon l'une des revendications 1 à 10, caractérisée en ce que la partie centrale de la paroi longitudinale est moins épaisse que les parties proches des faces.

12. Cheville à souder selon l'une des revendications 1 à 11, caractérisée en ce que la paroi de la douille (63) présente des fenêtres (64).

13. Cheville à souder selon l'une des revendications 1 à 12, caractérisée en ce que la surface extérieure (71) de la paroi de la douille constituant la cheville à souder (70) est cylindrique, et que la surface intérieure (69) de ladite paroi de la douille présente une configuration polygonale, plus particulièrement hexagonale.

14. Appareil à souder pour le soudage d'éléments de fixation allongés, plus particulièrement de chevilles à souder, comprenant un canal d'admission et un logement axialement déplaçable pour lesdits éléments de fixation, caractérisé en ce qu'au lieu d'une pince de serrage (?), ledit logement axialement déplaçable (5) est réalisé sous forme d'un tube rigide dans lequel ledit élément de fixation sous forme d'une douille flexible (1, 12, 20, 29, 32, 35) est guidé.

15. Appareil à souder selon la revendication 14, caractérisé en ce qu'un gaz protecteur (inerte?) est amené à l'endroit du soudage par le centre (38) dudit élément de fixation.

16. Procédé pour la mise en oeuvre de l'appareil à souder selon la revendication 14 pour chevilles à souder selon la revendication 3, caractérisé en ce que les chevilles à souder sont alimentées à l'amenée sans triage de positionnement préalable, et amenées audit logement, où elles sont mises en position de départ dans ledit tube rigide pour être amenées et soudées à l'élément de construction, par une impulsion d'air comprimé.

17. Procédé pour la fixation d'un élément de montage sur un élément de fixation, comprenant les étapes suivantes:
- un élément de fixation sous forme d'une douille élastique (1, 12, 20, 29, 32, 35, 46, 62, 70) est amené à un élément de construction, le contact électrique est établi en vertu de sa propriété élastique, ledit élément de fixation est retenu et soudé par soudage à l'arc, et
- ledit élément de montage (10, 16, 21, 40, 41, 43, 50, 55, 60, 66) est relié par adhérence et/ou par fermeture géométrique en vertu de la propriété élastique de l'élément de fixation.

18. Procédé selon la revendication 17, caractérisé en ce que des éléments de retenue (14, 23) disposés à la paroi extérieure de l'élément de fixation (12, 20) s'engagent derrière l'alésage (18, 27) dudit élément de montage (16, 21).

19. Procédé selon la revendication 17 ou 18, caractérisé en ce que l'alésage (27) dudit élément de montage (21) présente un épaulement (28) pouvant s'engager derrière des éléments de retenue (23) disposés à la paroi extérieure de l'élément de fixation (20).

20. Procédé selon l'une des revendications 17 à 19, caractérisé en ce que l'élément de montage (40) comporte un poteau (40a) (post) et/ou un alésage (40b) dans lequel s'engagent, lorsque l'élément de montage (40) est enfiché, des crampons (39, 39') afin d'arrêter ledit élément de montage.

21. Procédé selon l'une des revendications 17 à 20, caractérisé en ce que l'élément de montage (41) comporte un poteau (42) s'engageant dans l'alésage (38) de l'élément de fixation (1) et entoure l'élément de fixation (1) par fermeture géométrique afin d'augmenter la force de retenue exercée sur ledit poteau par la paroi dudit alésage (38).

22. Procédé selon l'une des revendications 17 à 21, caractérisé en ce que l'élément de montage (43) présente un poteau (44) ayant une barbe (45) à fermeture géométrique.

23. Procédé selon l'une des revendications 17 à 22, caractérisé en ce que l'élément de montage est un serre-câble (50) dont la partie de contact femelle (49) entoure l'extrémité libre de l'élément de fixation (1, 46) soudé.

24. Procédé selon l'une des revendications 17 à 18, caractérisé en ce que l'élément de montage (55) présente un trou borgne (56) destiné à recevoir l'élément de fixation (1, 46) ainsi qu'une plus petite ouverture (57) concentrique destinée à recevoir une broche d'écartement (53) qui rentre dans l'élément de fixation et dont la longueur est inférieure à la distance minimale entre les faces de l'élément de fixation.

25. Procédé selon la revendication 24, caractérisé en ce que ladite broche d'écartement (53) présente au moins à l'une des extrémités une fente ou six pans creux (54) (?), ainsi qu'une enveloppe lisse, cannelée (58) ou exécutée sous forme de filetage (59).

26. Procédé selon l'une des revendications 17 à 22, caractérisée en ce que l'élément de montage est constitué d'un capuchon rigide (60) avec bourrelet intérieur (61) ou comporte un tel capuchon, ce dernier étant enfiché sur un élément de fixation (12) dont les bords sont repliés vers l'extérieur en forme de U.

27. Procédé selon l'une des revendications 17 à 22, caractérisé en ce que l'élément de montage (66) présente un alésage ayant des saillies (65) qui rentrent dans ledit alésage, lesdites saillies s'encliquetant dans des fenêtres (64) de forme correspondante, pratiquées dans la paroi de la douille (63) de l'élément de fixation (62).

28. Procédé selon la revendication 27, caractérisé en ce que lesdites saillies (65) présentent des chanfreinages (65) sur le bas, c'est-à-dire du côté support (9), et un épaulement (68) sur le haut.

29. Procédé selon l'une des revendications 17 à 28, caractérisé en ce que la surface extérieure (71) de la paroi de la douille de l'élément de fixation (70) est cylindrique, alors que la surface inférieure de la paroi de la douille est polygonale, plus particulièrement hexagonale.
